# EUROPÄISCHE PATENTSCHRIFT

(11) **EP 1 275 871 B1**
(45) Veröffentlichungstag und Bekanntmachung des Hinweises auf die Patenterteilung: **14.09.2005**
(21) Anmeldenummer: 02012288.3
(22) Anmeldetag: 05.06.2002
(51) Int. Cl.: F16D 65/12, C04B 35/573, C04B 41/00

(54) **Oxydationsgeschützte Bremsscheibe**
Brake disc protected from oxidation
Disque de frein protégé de l'oxydation

(30) Priorität: 13.07.2001 DE 10134059
(43) Veröffentlichungstag der Anmeldung: 15.01.2003
(73) Patentinhaber: Dr.Ing. h.c.F. Porsche Aktiengesellschaft, 70435 Stuttgart (DE)
(72) Erfinder: Martin, Roland, 73432 Aalen (DE)

(56) Entgegenhaltungen:
- EP-A- 0 913 373
- EP-A- 1 251 289
- DE-A- 2 540 083
- DE-A- 19 616 217
- US-A- 6 136 374
- HAUG ET AL: "Method for manufacture of oxidation-resistant fiber-reinforced ceramics" WERKST. VERFAHRENSTECH, SYMPOSIUM, WERKSTOFFWOCHE, XX, XX, 1997, Seiten 943-955, XP002105058

## Beschreibung

Die Erfindung betrifft eine oxidationsgeschützte Bremsscheibe aus faserverstärkter Keramik, eine Verwendung eines Lackes für eine solche Bremsscheibe sowie ein Verfahren zur Herstellung einer solchen Bremsscheibe.

Bremsscheiben aus faserverstärkter Keramik sind bereits aus der DE 44 38 455 C1 sowie der DE 198 34 542 A1 bekannt. Die DE 44 38 455 C1 zeigt ein Verfahren zur Herstellung einer Reibeinheit, bei der ein poröser Kohlenstoffkörper mit flüssigem Silizium infiltriert wird. Hierbei wandelt sich das Silizium mit dem Kohlenstoff zu Siliziumkarbid SiC um. Der Kohlenstoffkörper ist vorzugsweise als Kohlenstofffaserkörper ausgeführt. Wird die Reibeinheit, hier eine Bremsscheibe, aus zwei Hälften zusammengesetzt, so können vor der Keramisierung in die Kohlenstoffkörper Ausnehmungen eingebracht werden, die sich durch das Zusammensetzen der Kohlenstoffkörper dann zu einem gemeinsamen Hohlraum, beispielsweise einem Kühlkanal, ergänzen. Die DE 198 43 542 A1 offenbart ebenfalls ein Verfahren zur Herstellung von Körpern, die Verstärkungsfasern enthalten. Im Unterschied zur DE 44 38 455 C1 werden Fasern, Faserbündel oder Faseragglomerate verwendet und so ausgerichtet, dass die Verstärkungsfasern im Bereich der Ausnehmungen in der Bremsscheibe in etwa parallel zu den Seitenkanten der Ausnehmungen orientiert sind. Diese Bremsscheiben aus faserverstärkter Keramik sind weitestgehend beständig gegenüber Umwelteinflüssen; im Betrieb ist nur ein geringer Verschleiß nachweisbar.

Die EP 0 913 373 zeigt einen mit Kohlefasern verstärkten Keramikverbundwerkstoff, vor allem für Anwendungen in Luft- und Raumfahrt. Zum Oxidationsschutz wir ein mindestens dreischichtiges Oxidationsschutzsystem vorgeschlagen, dessen mittlere Schicht auch der lokalen Rissversiegelung durch Glasbildung dienen kann. Hierzu sind in der mittleren Schicht Übergangsmetallboride und- Silizide vorgesehen.

Die Veröffentlichung von Haug et al: "Method for manufacture of oxidation-resistant fiber-reinforced ceramics" in Werkst. Verfahrenstech., Symposium, Werkstoffwoche, 1997, Seiten 943-955 zeigt ein Herstellverfahren für oxidationsbeständige, faserverstärkte Keramiken bei Anwendungen in der Luft- und Raumfahrt, insbesondere Kohlenstoff faserverstärkte SiC - Keramik. Neben einem inneren Oxidationsschutz durch Versiegelung der Kohlenstofffasern ist dargestellt, dass ein wirkungsvoller äußerer Oxidationsschutz nur durch eine Kombination mehrerer Schichten möglich ist. U. a. werden als Zwischenschicht Thermoviskoseschichten vorgeschlagen, die aus Boriden, Karbiden und Siliziden bestehen.

Die DE 196 16 217 A offenbart eine Schutzbeschichtung für Werkstücke insbesondere aus Kohlenstoff - Verbundwerkstoff, bei der die Schutzschicht neben keramischen Pulverteilchen auch Metall- BorVerbindungen enthält.

Die Firma Ceramic Solutions, Inc., Hawthorne USA vertreibt verschiedene Schutzlacke für Karbonwerkstoffe. Vertrieben wird ein Primer-Lack (Bezeichnung: CSP-2), der auf Grundlage von Phosphaten hergestellt ist und einen Oxidationsschutz für Karbon - Oberflächen bildet. Dieser Lack dringt in die Oberflächenporositäten ein und vermindert auf diese Weise die Oxidationsrate. Der Primer - Lack dient als Grundschicht für einen Decklack, der ebenfalls von der Firma Ceramic Solutions vertrieben wird. Diese Decklacke sind für Betriebstemperaturen bis 927° Celsius bzw. 1149° Celsius anwendbar. Diese Decklacke weisen eine hohe Beständigkeit gegenüber Wasser, Wasserdampf und Salzen der Alkalimetalle auf. Sie sind keramikbasiert und bilden eine Barriere, die die Oxidation von Karbon verhindert. Sie werden in Verbindung mit dem beschriebenen Primer - Lack zur Verwendung auf Graphit, Karbon und Karbon/Verbundwerkstoffe angeboten, um Oxidation zu verhindern. Schließlich wird von der Firma Ceramic Solutions ein Schutzlack angeboten, dessen Betriebstemperaturbereich bis 1260° reicht. Dieser Lack ist extrem beständig gegenüber Wasser und Wasserdampf und widersteht ebenfalls Angriffen durch Salze der Alkalimetalle. Bei diesem Schutzlack handelt es sich um einen keramisch basierten Dichtwerkstoff, der die Oxidation von Karbon und anderen keramischen Phasen bietet. Dieser Schutzlack wird für eine Verwendung auf keramischen Verbundwerkstoffen empfohlen, die Karbon oder andere, für eine aktive Oxidation empfängliche Phasen enthalten. Dieser Schutzlack wird als Versiegelung über einer primären Schutzschicht (z. B. SiC, Si₃N₄, Oxyde etc.) empfohlen.

Es ist Aufgabe der Erfindung, Schädigungen der Bremsscheibe zu vermindern und möglichst ganz zu vermeiden.

Diese Aufgabe wird mit den Merkmalen der unabhängigen Patentansprüche gelöst. Der Erfindung liegt dabei die überraschende Erkenntnis zugrunde, dass entgegen bisheriger Annahmen Bremsscheiben aus faserverstärkter Keramik trotz der an und für sich sehr beständigen Keramik - Bestandteile eines Oxidationsschutzes bedürfen, um auch unter Betriebsbedingungen, wie sie bei Fahrzeugen auftreten, gegen Oxidation beständig zu sein.

Vorrichtungsgemäß wird vorgeschlagen, dass die Bremsscheibe mit einer Schicht aus einem hoch temperaturbeständigen, bei Betriebstemperatur der Bremsscheibe zähflüssigem Lack vorgesehen ist. Die hohe Temperaturbeständigkeit des Lackes ist erforderlich, damit der Lack bei den im Bremsbetrieb auftretenden Temperaturen von mehr als 1100° Celsius nicht zerstört wird. Eine wesentliche Eigenschaft des Lackes aber ist, dass er im Betriebstemperaturbereich der Bremsscheibe zähflüssig wird, d.h. dass die Glastemperatur des Lackes unterhalb der Betriebstemperatur der Bremsscheibe liegt und sich somit der Lack bis zum Erreichen seiner Schmelztemperatur in einem zäh- bis weicheleastischen Zustand befindet. Dieses Verhalten führt in vorteilhafter Weise dazu, dass sich stets ein geschlossener Lackfilm bildet und der Zutritt von Sauerstoff zur Bremsscheibe verhindert oder sogar unterbunden wird. Auch Beschädigungen der Lackschicht, z. B. durch Rissbildung, können auf diese Weise geheilt werden. Es ist vorzugsweise vorgesehen, dass der Lack bis wenigstens 1200° Celsius temperaturbeständig ist und oberhalb von etwa 400° Celsius zähflüssig wird.

Gemäß einer Weiterbildung der Erfindung kann es vorgesehen sein, dass dem Lack zusätzliche, farbgebende Pigmente, wie beispielsweise Aluminiumoxid beigefügt sind. Diese Pigmente sollten eine dem Grundlack vergleichbare Temperaturbeständigkeit aufweisen. Mit derartigen Farbpigmenten ist es in vorteilhafter Weise möglich, die Lackschicht optisch von der Bremsscheibe abzuheben und sichtbar zu machen. Beispielsweise können damit mit einer Lackschicht versehene Bremsscheiben besonders gekennzeichnet werden.

Besonders vorteilhaft ist es, wenn die Farbpigmente thermisch instabil sind und einen Farbumschlag bei Erreichen einer spezifischen Grenztemperatur hervorrufen. Durch die Verwendung derartiger Farbpigmente ist es zusätzlich möglich, die Überschreitung von durch die Auswahl der Farbpigmente vorgegebenen Grenztemperaturen anzuzeigen. Eine solche Anzeige kann verwendet werden, um Überlastung der Bremsscheibe anzuzeigen, so dass beispielsweise bei der nächsten Inspektion des Fahrzeuges diese Überlastung erkannt und ein Austausch der Bremsscheiben veranlasst wird.

Vorteilhafter Weise sind die Reibfläche der Bremsscheibe sowie die Kontaktflächen der Bremsscheiben zu anderen Bauteilen, wie z. B. einem Topf der Bremsscheibe oder Befestigungselementen der Bremsscheibe, nicht von einer Lackschicht bedeckt. Zum Einen dürfen durch die Lackschicht die Reibeigenschaften der Bremsscheibe nicht verändert werden. Zum Anderen sind Kontaktflächen der Bremsscheibe dem Luftsauerstoff nicht frei ausgesetzt, so dass hier die Gefahr eines Sauerstoffeintrittes gering ist.

Verwendungsgemäß wird die Aufgabe dadurch gelöst, dass ein hoch temperaturbeständiger, bei Betriebstemperatur zähflüssiger Lack auf eine Bremsscheibe aus faserverstärkter Keramik aufgebracht wird.

Verfahrensgemäß ist es ergänzend vorgesehen, dass ein hoch temperaturbeständiger, bei Betriebstemperatur der Bremsscheibe zähflüssiger Lack auf eine Bremsscheibe aus faserverstärkter Keramik aufgebracht wird. Wenn die Reibfläche sowie ggf. vorhandene Kontaktflächen nicht von Lack bedeckt sein sollen, wird weiterhin vorgeschlagen, dass diese Flächen beim Lackieren abgedeckt sind. Gemäß einer alternativen Weiterbildung der Erfindung wird vorgeschlagen, diese Flächen zunächst mitzulackieren und nach dem Lackieren mechanisch zu bearbeiten. Diese Vorgehensweise weist den Vorteil auf, dass hier weitere Lackierverfahren, wie z. B. das Tauchlackieren, anwendbar sind. Außerdem ist durch dieses Verfahren sicher gestellt, dass nicht doch Lackreste beispielsweise durch Unterkriechen einer Abdeckung auf Reibflächen oder Kontaktflächen gelangen. Das mechanische Abtragen der Lackschicht kann vorteilhafter Weise zusammen mit einer Endbearbeitung der Reibflächen oder der Kontaktflächen erfolgen.

Die Erfindung ist nachstehend anhand eines Ausführungsbeispieles näher erläutert.

Es zeigen:
- Fig. 1: eine Bremsscheibe aus faserverstärkter Keramik,

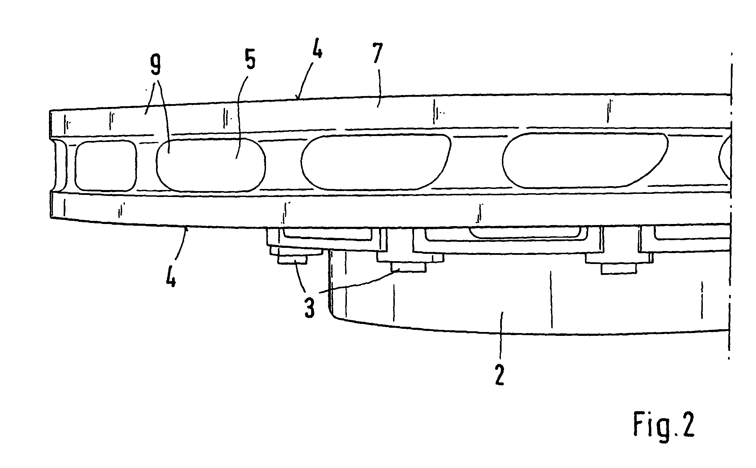

- Fig. 2: eine seitliche Detailansicht der Bremsscheibe,

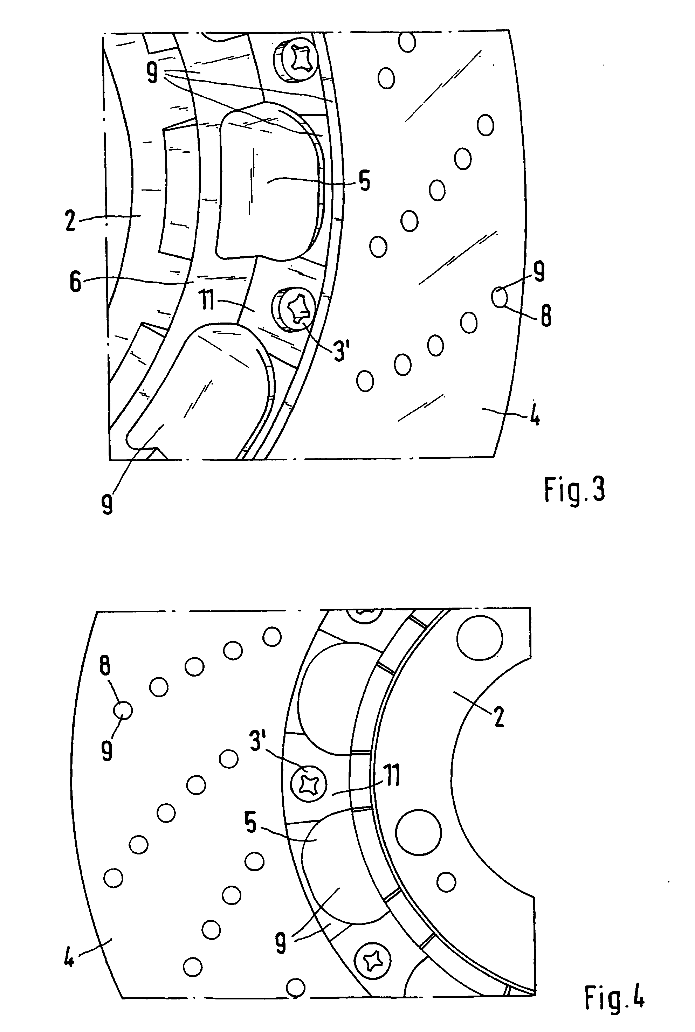

- Fig. 3: eine Detailansicht des inneren Umfanges der Bremsscheibe und
- Fig. 4: eine Detailansicht der Reibfläche mit Bohrungen.

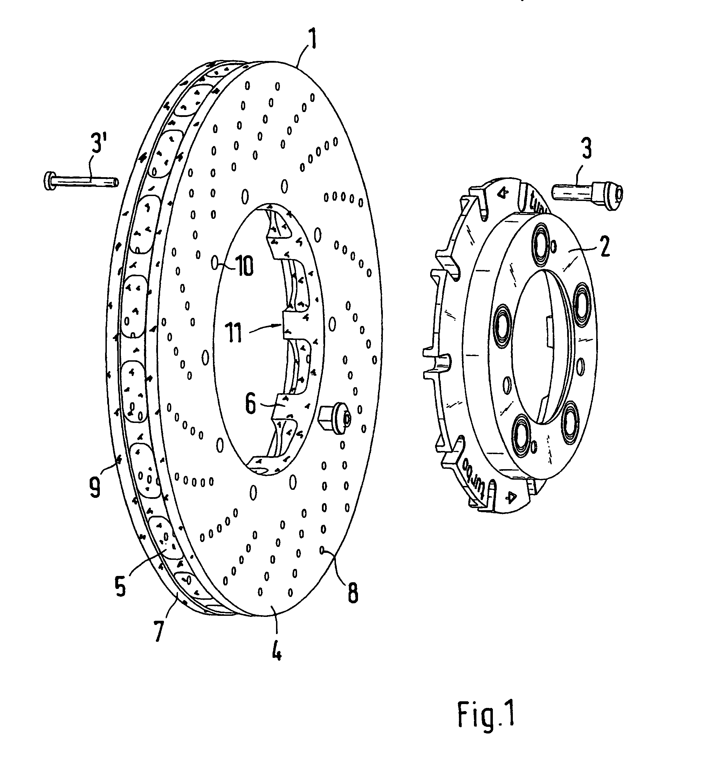

Die in Fig. 1 gezeigte Bremsscheibe besteht aus einem Reibring 1 und einem Bremstopf 2. Der Reibring und der Bremstopf 2 sind durch Befestigungselemente 3 miteinander verbunden. Die Befestigungselemente 3 sind im Bremstopf 2 so geführt, dass unterschiedliche thermische Dehnungen des Bremsringes 1 und des Bremstopfes 2 ausgeglichen werden.

Der Bremsring 1 besteht aus faserverstärkter Keramik, genauer aus C - Faser verstärktem Siliziumcarbid (C/CSiC). Der Bremstopf 2 wie auch die Befestigungselemente 3 samt Schrauben 3' bestehen aus Edelstahl.

Der Bremsring 1 weist außenseits zwei Reibflächen 4 auf, die mit hier nicht gezeigten Reibbelägen in Kontakt stehen. Üblicherweise ist die dargestellt Bremsscheibe für eine Teilbelag - Scheibenbremsanlage verwendet, d. h. die Reibbeläge überdecken jeweils nur einen Teil der Reibflächen 4.

Zur besseren Kühlung der Bremsscheibe sind innerhalb des Reibringes 1 Kühlkanäle 5 vorgesehen, die sich von einem inneren Umfang 6 evolventenförmig zu einem äußeren Umfang 7 erstrecken. Ausgehend von der Reibfläche 5 sind ferner Bohrungen 8 vorgesehen, die sich bis in die Kühlkanäle erstrecken.

Zum Schutz gegen Sauerstoffzutritt ist die Bremsscheibe mit einer Lackschicht 9 versehen. Die Lackschicht 9 überdeckt den äußeren Umfang 7 der Bremsscheibe, den inneren Umfang 6 der Bremsscheibe, die Kühlkanäle 5 sowie die Bohrungen 8. Die Reibflächen 4 einschließlich Kontaktflächen 10 zum Bremstopf 2, hier auch Kontaktflächen 11 zu Köpfen der schrauben 3', sind nicht mit der Lackschicht 9 bedeckt. Im vorliegenden Beispiel weist die Lackschicht 9 eine Gesamtstärke von 200 µm +/- 100 µm auf.

Zum Aufbringen der Lackschicht 9 werden zunächst die Reibflächen 4 sowie die Kontaktflächen 10, 11mit entsprechend zugeschnittenen, hier nicht gezeigten selbstklebenden Folien abgedeckt. Anschließend wird die Bremsscheibe in einem ersten Arbeitsgang mit einer Primer - Schicht 12 (Lack mit der Bezeichnung "CSP-2" der Fa. Ceramic Solutions, Inc., USA) versehen, die folgende Zusammensetzung aufweist:
- Anorganische Phospat: 2 bis 15 %
- Essigsäure: 15 bis 30 %
- Armodiumnitrat: 8 bis 20 %
- Wasser: 40 bis 70 %

Nach dem Auftragen wird die Primerschicht 12, beispielsweise in einem Ofen, getrocknet. Anschließend wird eine Deckschicht 13 (Lack mit der Bezeichnung "CSD1550D" der Fa. Ceramoc Solutions, Inc., USA) mit folgender Zusammensetzung aufgebracht:
- Metalloxyde: 50 bis 70 %
- Organische Lösungsmittel: 20 bis 45 %
- Siliconharz: 5 bis 15 %

Auch die Deckschicht 13 wird anschließend getrocknet.

Die Lackschicht 9 wird beim Betrieb der Bremsscheibe zähflüssig und zerfließt zu einer durchgehenden Schicht, die in alle Unebenheiten der Oberfläche des Bremsringes 2 eindringt. Eventuell in der Lackschicht 9 auftretende Risse werden bei der nächsten Erwärmung, d. h. beim nächsten Bremsbetrieb, durch erneutes Aufweichen der Lackschicht 9 durch das Verlaufen der Lackschicht wieder geschlossen.

Der Deckschicht 13 können zusätzlich Farbpigmente wie z. B. Metalloxide beigemischt sein. Diese haben den Zweck, die Lackschicht 9 farblich besser sichtbar zu gestalten. Ein solche Einfärbung ist insbesondere am äußeren Umfang 7 der Bremsscheibe, überraschenderweise aber auch in den Bohrungen 8 sichtbar.

Die Lackschicht 9 kann durch Farbpigmente auch so aufgebaut sein, dass sie die Funktion einer Belastungs-Anzeige übernimmt, d.h. je nach Einstellung der Farbpigmente in der Lackschicht 9 kann durch einen Farbumschlag die thermische Belastung der Bremsscheibe erkannt werden.

## Patentansprüche

1. Oxydationsgeschützte Bremsscheibe aus faserverstärkter Keramik, **dadurch gekennzeichnet, dass** eine Schicht aus einem hochtemperaturbeständigen Lack vorgesehen ist, der sich bei Betriebstemperatur der Bremsscheibe im zähflüssigen Zustand befindet und auf einer Magnesium-Borsilikat-Verbindung basiert.

2. Bremsscheibe nach Anspruch 1, **dadurch gekennzeichnet, dass** die Glastemperatur des Lackes oberhalb von etwa 400 °C liegt und der Lack bis etwa 1200 °C temperaturbeständig ist.

3. Bremsscheibe nach einem der Ansprüche 1 oder 2, **dadurch gekennzeichnet, dass** dem Lack zusätzliche, farbgebende Pigmente beigefügt sind.

4. Bremsscheibe nach Anspruch 3, **dadurch gekennzeichnet, dass** die farbgebenden Pigmente ihre Farbe bei Überschreiten einer spezifischen Grenztemperatur verändern.

5. Bremsscheibe nach einem der vorstehenden Ansprüche, **dadurch gekennzeichnet, dass** die Reibfläche und Kontaktflächen der Bremsscheibe nicht von dem Lack bedeckt sind.

6. Verwendung eines einem hochtemperaturbeständigen, bei Betriebstemperatur der Bremsscheibe zähflüssigem Lackes für eine Bremsscheibe aus faserverstärkter Keramik, der auf einer Magnesium-Borsilikat-Verbindung basiert.

7. Verwendung nach Anspruch 6, **dadurch gekennzeichnet, dass** die Glastemperatur des Lackes oberhalb von etwa 400 °C liegt und der Lack bis etwa 1200 °C temperaturbeständig ist.

8. Verwendung nach einem der Ansprüche 6 bis 7, **dadurch gekennzeichnet, dass** die Reibfläche und Kontaktflächen der Bremsscheibe nicht von dem Lack bedeckt sind.

9. Verwendung nach einem der Ansprüche 6 bis 8, **dadurch gekennzeichnet, dass** dem Lack zusätzliche, farbgebende Pigmente beigefügt sind.

10. Verwendung nach Anspruch 9, **dadurch gekennzeichnet, dass** die farbgebenden Pigmente ihre Farbe bei Überschreiten einer spezifischen Grenztemperatur verändern.

11. Verfahren zur Herstellung einer oxydationsgeschützten Bremsscheibe aus faserverstärkter Keramik, **dadurch gekennzeichnet, dass** die Bremsscheibe mit einem hochtemperaturbeständigen, bei Betriebstemperatur der Bremsscheibe zähflüssigem Lack beschichtet wird, der auf einer Magnesium-Borsilikat-Verbindung basiert.

12. Verfahren nach Anspruch 11, **dadurch gekennzeichnet, dass** die Glastemperatur des Lackes oberhalb von etwa 400 °C liegt und der Lack bis etwa 1200 °C temperaturbeständig ist.

13. Verfahren nach einem der Ansprüche 11 oder 12, **dadurch gekennzeichnet, dass** dem Lack zusätzliche, farbgebende Pigmente beigefügt sind.

14. Verfahren nach Anspruch 13, **dadurch gekennzeichnet, dass** die farbgebenden Pigmente ihre Farbe bei Überschreiten einer spezifischen Grenztemperatur verändern.

15. Verfahren nach einem der Ansprüche 11 bis 14, **dadurch gekennzeichnet, dass** die Reibfläche und Kontaktflächen der Bremsscheibe nicht von dem Lack bedeckt sind.

16. Verfahren nach Anspruch 15, **dadurch gekennzeichnet, dass** die Reibfläche und Kontaktflächen der Bremsscheibe beim Lackieren abgedeckt sind.

17. Verfahren nach Anspruch 15, **dadurch gekennzeichnet, dass** die Reibfläche und Kontaktflächen der Bremsscheibe nach dem Lackieren mechanisch bearbeitet werden.

## Claims

1. A brake disc protected against oxidation and comprising fibre-reinforced ceramic, **characterised in that** a layer of a high-temperature-resistant paint is provided which is in a viscous state at the operating temperature of the brake disc and is based on a magnesium/borosilicate compound.

2. A brake disc according to claim 1, **characterised in that** the glass transition temperature of the paint lies above approximately 400°C and the paint is temperature-resistant up to approximately 1200°C.

3. A brake disc according to either one of claims 1 and 2, **characterised in that** additional colouring pigments are added to the paint.

4. A brake disc according to claim 3, **characterised in that** the colouring pigments change their colour when a specific boundary temperature is exceeded.

5. A brake disc according to any one of the preceding claims, **characterised in that** the friction surface and contact surfaces of the brake disc are not covered by the paint.

6. Use of a high-temperature-resistant paint, which is viscous at the operating temperature of the brake disc and is based on a magnesium/borosilicate compound, for a brake disc comprising fibre-reinforced ceramic.

7. Use according to claim 6, **characterised in that** the glass transition temperature of the paint lies above approximately 400°C and the paint is temperature-resistant up to approximately 1200°C.

8. Use according to either one of claims 6 and 7, **characterised in that** the friction surface and contact surfaces of the brake disc are not covered by the paint.

9. Use according to any one of claims 6 to 8, **characterised in that** additional colouring pigments are added to the paint.

10. Use according to claim 9, **characterised in that** the colouring pigments change their colour when a specific boundary temperature is exceeded.

11. A method of manufacturing a brake disc protected against oxidation and comprising fibre-reinforced ceramic, **characterised in that** the brake disc is coated with a high-temperature-resistant paint which is viscous at the operating temperature of the brake disc and is based on a magnesium/borosilicate compound.

12. A method according to claim 11, **characterised in that** the glass transition temperature of the paint lies above approximately 400°C and the paint is temperature-resistant up to approximately 1200°C.

13. A method according to either one of claims 11 and 12, **characterised in that** additional colouring pigments are added to the paint.

14. A method according to claim 13, **characterised in that** the colouring pigments change their colour when a specific boundary temperature is exceeded.

15. A method according to any one of claims 11 to 14, **characterised in that** the friction surface and contact surfaces of the brake disc are not covered by the paint.

16. A method according to claim 15, **characterised in that** the friction surface and contact surfaces of the brake disc are covered during the painting process.

17. A method according to claim 15, **characterised in that** the friction surface and contact surfaces of the brake disc are mechanically treated after the painting process.

## Revendications

1. Disque de frein protégé contre l'oxydation en céramique renforcée par des fibres, **caractérisé en ce qu'**il est prévu une couche de laque de grande résistance thermique qui, à la température de fonctionnement du disque de frein, se trouve à l'état visqueux et a pour base un composé de magnésium et de silicate de bore.

2. Disque de frein selon la revendication 1, **caractérisé en ce que** la température de transition vitreuse de la laque est supérieure à environ 400 °C et la laque résiste à une température allant jusqu'à 1 200 °C.

3. Disque de frein selon l'une des revendications 1 ou 2, **caractérisé en ce que** des pigments de coloration supplémentaires sont ajoutés à la laque.

4. Disque de frein selon la revendication 3, **caractérisé en ce que** les pigments de coloration changent de couleur lorsqu'une température limite spécifique est dépassée.

5. Disque de frein selon l'une des revendications précédentes, **caractérisé en ce que** la surface de friction et les surfaces de contact du disque de frein ne sont pas recouvertes par la laque.

6. Utilisation d'une laque de grande résistance thermique, visqueuse à la température de fonctionnement du disque de frein, pour un disque de frein en céramique renforcée par des fibres, à base d'un composé de magnésium et de silicate de bore.

7. Utilisation selon la revendication 6, **caractérisée en ce que** la température de transition vitreuse de la laque est supérieure à environ 400 °C et la laque résiste à une température allant jusqu'à environ 1 200 °C.

8. Utilisation selon l'une des revendications 6 ou 7, **caractérisée en ce que** la surface de friction et les surfaces de contact du disque de frein ne sont pas recouvertes par la laque.

9. Utilisation selon l'une des revendications 6 à 8, **caractérisée en ce que** des pigments de coloration supplémentaires sont ajoutés à la laque.

10. Utilisation selon la revendication 9, **caractérisée en ce que** les pigments de coloration changent de couleur lorsqu'est dépassée une température limite spécifique.

11. Procédé de fabrication d'un disque de frein protégé contre l'oxydation en céramique renforcée par des fibres, **caractérisé en ce que** le disque de frein est recouvert d'une laque de grande résistance thermique, visqueuse à la température de fonctionnement du disque de frein, qui est à base d'un composé de magnésium et de silicate de bore.

12. Procédé selon la revendication 11, **caractérisé en ce que** la température de transition vitreuse de la laque est supérieure à environ 400 °C et la laque résiste à une température allant jusqu'à environ 1 200 °C.

13. Procédé selon l'une des revendications 11 ou 12, **caractérisé en ce que** des pigments de coloration supplémentaires sont ajoutés à la laque.

14. Procédé selon la revendication 13, **caractérisé en ce que** les pigments de coloration changent de couleur lorsqu'est dépassée une température limite spécifique.

15. Procédé selon l'une des revendications 11 à 14, **caractérisé en ce que** la surface de friction et les surfaces de contact du disque de frein ne sont pas recouvertes par la laque.

16. Procédé selon la revendication 15, **caractérisé en ce que** la surface de friction et les surfaces de contact du disque de frein sont recouvertes lors de l'application de la laque.

17. Procédé selon la revendication 15, **caractérisé en ce que** la surface de friction et les surfaces de contact du disque de frein sont usinées mécaniquement après application de la laque.
